# EUROPÄISCHE PATENTANMELDUNG

(11) **EP 1 243 399 A2**
(43) Veröffentlichungstag der Anmeldung: **25.09.2002**
(21) Anmeldenummer: 02003766.9
(22) Anmeldetag: 20.02.2002
(51) Int. Cl.: B29C 47/90

(54) **Verfahren und Anlage zur Herstellung einer Folie aus thermoplastischem Kunststoff**

(30) Priorität: 17.03.2001 DE 10113089
(71) Anmelder: Reifenhäuser GmbH & Co. Maschinenfabrik, 53839 Troisdorf (DE)
(72) Erfinder: Steinberg, Klaus, 53844 Troisdorf (DE); Ebert, Friedhelm, 53639 Königswinter (DE)
(74) Vertreter: Müller-Gerbes, Margot, Dipl.-Ing.

(57) **Zusammenfassung**

Die Erfindung betrifft ein Verfahren und eine Anlage zur Herstellung einer Folie aus thermoplastischem Kunststoff, bei welchem der Kunststoff aus einem Blaskopf (1) eines Extruders unter Ausbildung einer Folienblase (4) austritt, wobei die Folienblase (4) unter Einwirkung einer Kalibriereinrichtung (2) auf einen vorbestimmbaren Durchmesser kalibriert wird sowie anschließend mittels einer Flachlegeeinrichtung (3) flachgelegt und aufgewickelt wird. Zur Vermeidung von Beschädigungen der Oberfläche der Folienblase (4) wird vorgeschlagen, den die Folienblase (4) bildenden Kunststoff vor dem Eintritt in die Kalibriereinrichtung (2) elektrostatisch aufzuladen und durch eine gleichermaßen elektrostatisch aufgeladene Kalibriereinrichtung (2) zu führen, so daß eine berührungslose Kalibrierung der Folienblase (4) ermöglicht ist.

## Beschreibung

Die Erfindung betrifft ein Verfahren zur Herstellung einer Folie aus thermoplastischem Kunststoff, bei welchem der Kunststoff aus einem Blaskopf eines Extruders unter Ausbildung einer Folienblase austritt und die Folienblase nachfolgend eine Kalibriereinrichtung durchläuft, in der sie auf einen vorbestimmbaren Durchmesser kalibriert wird sowie anschließend mittels einer Flachlegeeinrichtung flachgelegt und hiernach aufgewickelt wird.

Dieses Herstellungsverfahren zur Herstellung von auch als Blasfolie bezeichneten Folien aus thermoplastischem Kunststoff ist vielfältig bekannt.

Charakteristisch hierbei ist es, daß der Kunststoff in thermoplastischem, aufgeschmolzenem Zustand aus der üblicherweise ringförmigen Öffnung des Blaskopfes austritt und sogleich zu einer Folienblase aufgeblasen wird, welche sich nachfolgend unter Abkühlung unterhalb der Erstarrungstemperatur verfestigt. Die Folienblase wird zudem durch eine Kalibriereinrichtung geführt und in ihrem Durchmesser kalibriert und hieran anschließend von einer Flachlegeeinrichtung zu einer Doppelfolienbahn flachgelegt und nachfolgend aufgewickelt.

Die Kalibriereinrichtung ist hierbei üblicherweise in Gestalt eines sogenannten Kalibrierkorbes ausgeführt, der die Folienblase außenseitig umgibt und eine Vielzahl von Kalibrierarmen umfaßt, die außenseitig mit dem Umfang der Folienblase in Kontakt stehen, um diese in ihrem Durchmesser festzulegen und zu kalibrieren. Die Kalibrierarme können beispielsweise eine Vielzahl von drehbaren Kunststoffrollen aufweisen, die auf der Oberfläche der Folienblase abrollen und diese gleichzeitig kalibrieren. Auch sind Ausführungsformen mit rotierenden Bürsten oder dergleichen bekannt geworden.

Alle diese Verfahren zeichnen sich dadurch aus, daß die Folienblase während ihres Durchlaufs durch die Kalibriereinrichtung mit den Kalibriermitteln, etwa den Kalibrierarmen und den an diesen befestigten Kunststoffrollen in Kontakt steht, da eine unmittelbare Berührung derselben stattfindet. Diese Berührung der im Bereich der Kalibriereinrichtung noch nicht vollständig abgekühlten und erstarrten Folie durch die Kalibriereinrichtung ist beispielsweise bei der Herstellung von hochtransparenten Folien von Nachteil, da sich entsprechende Laufmarkierungen auf der Oberfläche der Folie infolge der Kontaktreibung ausbilden können, die nachfolgend das optische Erscheinungsbild der hergestellten Folie negativ beeinträchtigen.

Eine möglichst berührungslose Kalibrierung der Folienblase kann von daher in bestimmten Anwendungsfällen von Vorteil sein.

Aus der EP 0 273 739 ist hierzu bereits vorgeschlagen worden, die Folienblase zwischen starken an der Innen- und Außenseite der Folienblase angreifenden Luftströmen berührungslos zu führen, um eine Kontaktreibung mit den dadurch hervorgerufenen Oberflächenbeeinträchtigungen der Folienblase zu vermeiden. Der hierfür notwendige Anlagenaufwand mit leistungsstarken Gebläsen, Luftleitungen sowie entsprechender Steuerungstechnik ist jedoch sehr hoch und darüber hinaus entsteht das Problem, daß bei zu starken Luftströmungen unerwünschte Temperaturbeeinflussungen der Folienblase auftreten können, die die Qualität der erhaltenen Folie negativ beeinflussen.

Die Erfindung hat sich von daher die Aufgabe gestellt, ein Verfahren zur Herstellung einer Folie aus thermoplastischem Kunststoff vorzuschlagen, bei welchem auf möglichst einfache Weise eine berührungslose Kalibrierung der Folienblase erfolgen kann.

Zur Lösung dieser Aufgabe wird ein Verfahren gemäß den Merkmalen des Patentanspruches 1 vorgeschlagen, bei dem der die Folienblase bildende Kunststoff vor dem Eintritt in die Kalibriereinrichtung mit einer elektrischen Ladung beaufschlagt und elektrostatisch aufgeladen wird und die Kalibriereinrichtung mit einer elektrischen Ladung gleichen Potentials in der Weise aufgeladen wird, daß die Folienblase berührungslos die Kalibriereinrichtung durchläuft.

Die mit dem erfindungsgemäßen Verfahren herstellbaren Folien aus thermoplastischem Kunststoff haben die nützliche Eigenschaft, daß sie sich beim Durchlauf durch ein ausreichend starkes elektrisches Feld in gut kontrollierbarer Weise elektrostatisch aufladen lassen und diese elektrostatische Aufladung über einen gewissen Zeitraum beibehalten. Hier setzt die Erfindung ein.

Indem der die Folienblase bildende thermoplastische Kunststoff vor seiner Abkühlung unterhalb der Erstarrungstemperatur und vor dem Eintritt in die Kalibriereinrichtung elektrostatisch aufgeladen wird, ist es möglich, diesen berührungslos durch die Kalibriereinrichtung zu führen, wenn diese mit gleichem Potential elektrisch aufgeladen wird. Die hierbei entstehenden Abstoßungskräfte zwischen der elektrisch aufgeladenen Folienblase und der Kalibriereinrichtung reichen einerseits aus, radiale Kräfte auf die Folienblase auszuüben, um diese außenseitig auf ihren gewünschten Durchmesser zu kalibrieren, verhindern aber gleichzeitig, daß die Folienblase mit den mit gleichem Potential aufgeladenen Teilen der Kalibriereinrichtung in Berührung kommt. Auf diese Weise werden die störenden Markierungen, Rillen, Beschädigungen etc. auf der Oberfläche der Folienblase beim Durchtritt durch die Kalibriereinrichtung in überraschend einfacher Weise zuverlässig vermieden.

Je nach Beschaffenheit der mit dem erfindungsgemäßen Verfahren hergestellten Folie und dem Grad der zwecks Kalibrierung außenseitig aufzubringenden Kräfte wird die elektrostatische Aufladung des Kalibrierkorbes bzw. der Kalibriereinrichtung gegenüber der elektrostatischen Aufladung des die Folienblase bildenden Kunststoffes entsprechend eingeregelt, so daß ein berührungsloser Durchtritt der Folienblase durch die Kalibriereinrichtung gewährleistet ist.

Vorteilhafte Ausgestaltungen und Weiterbildungen des erfindungsgemäßen Verfahrens sind Gegenstand der Unteransprüche 2 bis 6.

Die Aufladung des die Folienblase bildenden Kunststoffes vor dem Eintritt in die Kalibriereinrichtung kann auf zwei verschiedenen Weisen erfolgen.

Zum einen ist es möglich, den Kunststoff nach seinem Austritt aus dem Blaskopf und vor dem Eintritt in die Kalibriereinrichtung elektrostatisch aufzuladen, wozu die Folienblase nach dem Austritt aus dem Blaskopf ein entsprechendes elektrisches Feld durchläuft, das quer zur Laufrichtung bzw. Ausbreitungsrichtung der Folienblase gerichtet ist.

In gleicher Weise ist es alternativ auch möglich, daß der Kunststoff bereits vor seinem Austritt aus dem Blaskopf innerhalb desselben elektrostatisch aufgeladen wird, wozu quer zur Ausbreitungsrichtung des Kunststoffes innerhalb der Schmelzekanäle des Blaskopfes ein entsprechendes elektrisches Feld erzeugt wird, welches den Kunststoff in der gewünschten Weise elektrostatisch auflädt.

In einer vorteilhaften Weiterbildung des erfindungsgemäßen Verfahrens ist auch die Flachlegeeinrichtung, mit der die Folienblase nach ihrem Durchlauf durch die Kalibriereinrichtung zu einer Doppelfolienbahn flachgelegt wird, mit einer elektrischen Ladung gleichen Potentials wie der Kunststoff und die Kalibriereinrichtung beaufschlagbar, so daß die Folienblase auch berührungslos die Flachlegeeinrichtung durchlaufen kann und von daher auch in diesem Bereich keine Beschädigungen der Oberfläche der Folienblase eintreten kann.

In Abhängigkeit von den individuellen Prozeßparametern kann hierbei die elektrostatische Aufladung des die Folienblase bildenden Kunststoffes vor dem Einritt in die Kalibriereinrichtung bereits ausreichend sein, um auch eine berührungslose Führung der Folienblase innerhalb der Flachlegeeinrichtung zu gewährleisten.

Sollte dies nicht der Fall sein, so wird gemäß einer weiteren vorteilhaften Ausführungsform der Erfindung vorgeschlagen, daß die Folienblase nach dem Durchlauf durch die Kalibriereinrichtung und vor dem Erreichen der Flachlegeeinrichtung erneut mit einer elektrischen Ladung beaufschlagt und elektrostatisch aufgeladen wird. Zu diesem Zweck kann die Folienblase zwischen Kalibriereinrichtung und Flachlegeeinrichtung ein entsprechendes elektrisches Feld durchlaufen, so daß sie erneut in der gewünschten Weise elektrostatisch aufgeladen wird.

Die elektrostatische Aufladung des Kunststoffes kann vorteilhaft in einem Spalt zwischen zwei Elektroden bewirkt werden, von denen eine innenseitig der Folienblase angeordnet ist und die andere unter Ausbildung eines Durchtrittsspaltes für die Folienblase dieselbe außenseitig ringförmig umgibt. Beide Elektroden weisen eine für die elektrostatische Aufladung des Kunststoffes ausreichende elektrische Potentialdifferenz auf, so daß das für die elektrostatische Aufladung benötigte elektrische Feld quer zur Ausbreitungsrichtung der Folienblase erzeugt werden kann.

Eine elektrostatische Aufladung des Kunststoffes kann auch mittels sogenannter Sprühelektroden erzielt werden, wobei in allen Fällen sowohl positive als auch negative Aufladung in Betracht kommen kann.

Die Erfindung umfaßt ferner eine Anlage zur Herstellung einer Folie aus thermoplastischem Kunststoff, die einen Extruder mit Blaskopf für den Austritt einer Folienblase des Kunststoffes, eine außenseitig auf die Folienblase einwirkende Kalibriereinrichtung sowie eine der Kalibriereinrichtung nachgeordnete Flachlegeeinrichtung für die Folienblase umfaßt und nach dem Verfahren gemäß einem der Patentansprüche 1 bis 6 betrieben wird.

Diese Anlage weist zur Erzielung der gewünschten berührungslosen Führung der Folienblase in der Kalibriereinrichtung eine Aufladungseinrichtung für den Kunststoff auf, die vor der Kalibriereinrichtung angeordnet ist und aus zwei Teilen besteht, zwischen denen ein Durchtrittsspalt für den Kunststoff ausgebildet ist. Ferner umfaßt die erfindungsgemäße Anlage eine Hochspannungsquelle mit Netzanschluß, Spannungsregler und Gleichrichter für die Erzeugung von gepulstem Gleichstrom, wobei ein Pol der Hochspannungsquelle an ein isoliert gelagertes Teil der Aufladungseinrichtung und die Kalibriereinrichtung angeschlossen ist. In der Aufladungseinrichtung kann sodann beispielsweise durch Anschluß des weiteren Teils der Aufladungseinrichtung an Masse das gewünschte elektrische Feld erzeugt werden, welches den die Folienblase bildenden Kunststoff bei seinem Durchtritt durch die Aufladungseinrichtung in der gewünschten Weise elektrostatisch auflädt. Die Kalibriereinrichtung ist an den gleichen Pol der Hochspannungsquelle angeschlossen und weist somit das gleiche Potential wie die elektrostatisch aufgeladene Folienblase auf, so daß die gewünschte Abstoßung zwischen Folienblase und der Kalibriereinrichtung erzielt wird und die Folienblase berührungslos die Kalibriereinrichtung durchläuft und gleichzeitig in ihrem Durchmesser in gewünschter Weise kalibriert wird.

Die vorangehend erläuterte Aufladungseinrichtung kann zwischen Blaskopf und Kalibriereinrichtung in Laufrichtung der Folienblase gesehen angeordnet werden oder auch innerhalb des Blaskopfes angeordnet sein.

Vorteilhaft umfaßt die Kalibriereinrichtung eine Vielzahl von bügelartig gebogenen Metallsegmenten, die entlang einer den Umfang der Folienblase umgebenden Kreislinie angeordnet sind und mit dem Gleichstrom der Hochspannungsquelle beaufschlagbar sind, so daß die gewünschten Kräfte berührungslos von der Kalibriereinrichtung über den gesamten Umfang der Folienblase im Durchtrittsbereich durch die Kalibriereinrichtung auf letztere übertragen werden können, ohne daß hierbei Kontaktreibung zwischen der Folienblase und der Kalibriereinrichtung entsteht.

In einer weiteren vorteilhaften Ausführungsform der erfindungsgemäßen Anlage kann sowohl das elektrisch isoliert gelagerte Teil der Aufladungseinrichtung, der Kalibrierkopf als auch die Flachlegeeinrichtung mit dem gleichen Pol der Hochspannungsquelle verbunden werden, so daß auch im Bereich der Flachlegeeinrichtung durch die elektrostatische Aufladung der Folienblase und die Beaufschlagung der Flachlegeeinrichtung mit dem gleichen elektrischen Potential eine berührungslose Führung der Folienblase gewährleistet ist.

Sollte die vor dem Eintritt der Folienblase in die Kalibriereinrichtung vorgesehene Aufladungseinrichtung nicht ausreichen, um die Folienblase auch noch für die berührungslose Führung innerhalb der Flachlegeeinrichtung elektrostatisch in genügender Weise aufzuladen, kann zwischen Kalibriereinrichtung und Flachlegeeinrichtung in Laufrichtung der Folienblase gesehen eine weitere Aufladungseinrichtung für die Folienblase vorgesehen werden.

Weitere Ausgestaltungen und Einzelheiten der Erfindung werden nachfolgend anhand der lediglich Ausführungsbeispiele darstellenden Zeichnungen erläutert. Es zeigen:
- Figur 1: in schematisierter Darstellung eine Anlage zur Herstellung einer Folie im Bereich ihres Blaskopfes und der Kalibriereinrichtung,
- Figur 2: eine weitere Ausführungsform einer Anlage zur Herstellung einer Folie im Bereich der Flachlegeeinrichtung.

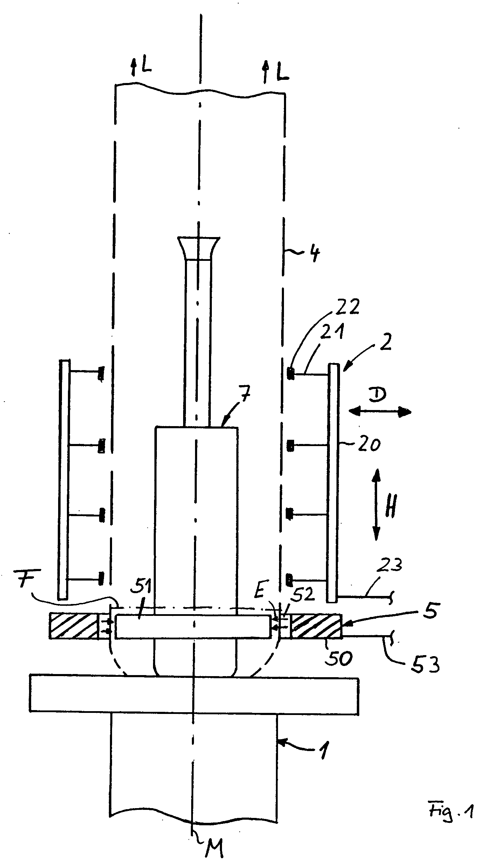

Die in der Figur 1 dargestellte Anlage zur Herstellung einer Folie aus thermoplastischem Kunststoff umfaßt einen nicht in näheren Einzelheiten dargestellten Blaskopf 1, der über einen hier nicht sichtbaren Extruder mit aufgeschmolzenem thermoplastischem Kunststoff beaufschlagt wird. Aus dem Blaskopf 1 tritt in an sich bekannter Weise über eine oberseitige ringförmige Austrittsöffnung der Kunststoff in thermoplastischem Zustand aus und wird sogleich zu einer Folienblase 4 aufgeblasen und in Pfeilrichtung L vertikal abgeführt. Diese Folienblase weist einen kreisförmigen Querschnitt mit einer Mittelachse M auf.

Unmittelbar nach dem Austritt aus dem Blaskopf ist der die Folienblase 4 bildende Kunststoff infolge seiner hohen Temperatur noch in thermoplastischem Zustand, kühlt jedoch rasch unterhalb seiner Erstarrungstemperatur ab, wodurch die Folienblase 4 in einen starren Zustand überführt wird. Der Übergang zwischen thermoplastischem Zustand und dem erstarrten Zustand der Folienblase 4 ist durch eine sogenannte Frostlinie F gekennzeichnet, die in Figur 1 angedeutet ist.

Man erkennt ferner in der Figur 1 den im Innern der Folienblase 4 in an sich bekannter Weise angeordneten Innenluftaustauscher 7, der der Stützung der Folienblase 4 dient.

Bereits kurz oberhalb des Blaskopfes und noch unterhalb der Frostlinie F der Folienblase 4, d. h. in einem Bereich, in welchem der die Folienblase 4 bildende und aus dem Blaskopf 1 austretende Kunststoff noch in thermoplastischem Zustand vorliegt, ist eine Aufladungseinrichtung 5 vorgesehen, durch die die Folienblase 4 hindurchtritt.

Die Aufladungseinrichtung 5 besteht aus zwei Teilen, nämlich einem Innenring 51, der im Innenraum der Folienblase 4 angeordnet ist, sowie einem Außenring 50, der rings um den Innenring 51 unter Belassung eines ringförmigen Durchtrittsspaltes 52 angeordnet ist, durch welchen die Folienblase 4 hindurchtritt.

Über eine Anschlußleitung 53 ist der Außenring 50 mit einer nicht dargestellten Hochspannungsquelle mit Netzanschluß, Spannungsregler und Gleichrichter für die Erzeugung von gepulstem Gleichstrom an einem Pol derselben verbunden, so daß der Außenring mit dem von der Hochspannungsquelle abgegebenen gepulsten Gleichstrom beaufschlagbar ist.

Der Außenring 50 ist gegenüber den weiteren Anlagenteilen in nicht näher dargestellter Weise elektrisch isoliert gehaltert.

Demgegenüber ist der Innenring 51 beispielsweise geerdet, so daß zwischen Außen- und Innenring 50, 51 ein quer, insbesondere senkrecht zur Laufrichtung L der Folienblase 4 verlaufendes elektrisches Feld E erzeugt wird, welches die durch den Durchtrittsspalt 52 hindurchtretende Folienblase 4 quer zu ihrer Laufrichtung L durchdringt.

Infolge der zwischen Außenring 50 und Innenring 51 herrschenden Potentialdifferenz und des erzeugten elektrischen Feldes E wird der die Folienblase 4 bildende Kunststoff beim Durchtritt durch die Aufladeeinrichtung in der gewünschten Weise elektrostatisch aufgeladen. Hierbei kann sowohl eine positive wie auch negative Aufladung der Folienblase erzielt werden und die Höhe dieser Aufladung kann ebenfalls durch entsprechende Steuerung und Regelung der an die Aufladeeinrichtung 5 über die Anschlußleitung 53 angeschlossenen Hochspannungsquelle individuell eingestellt werden. Die solchermaßen elektrostatisch aufgeladene Folienblase 4 tritt im Anschluß an die Aufladeeinrichtung 5 und oberhalb ihrer Frostlinie F, d. h im erstarrten Zustand in eine Kalibriereinrichtung 2 ein, in welcher die Folienblase 4 in ihrem Umfang kalibriert wird.

Zu diesem Zweck umfaßt die Kalibriereinrichtung 2 einen die Folienblase 4 umfangsseitig umgebenden Kalibrierkorb 20, an dessen Innenseite in Richtung auf die durch die Kalibriereinrichtung 2 hindurchtretende Folienblase 4 eine Vielzahl von Tragarmen 21 angeordnet sind. Diese Tragarme 21 tragen an ihrem freien, dem Außenumfang der Folienblase 4 benachbarten Ende jeweils Metallsegmente 22, deren Zahl und Anordnung in der Figur 1 nur schematisch dargestellt sind. Bevorzugt werden hierbei bügelartig gebogene Metallsegmente 22 vorgesehen, die auf einer gemeinsamen die Folienblase 4 umgebenden Kreislinie segmentartig angeordnet sind, so daß sie möglichst große Bereiche der Umfangsoberfläche der Folienblase 4 beim Durchtritt durch die Kalibriereinrichtung 2 beaufschlagen können.

Die Kalibriereinrichtung 2 ist über eine Anschlußleitung 23 ebenso an die Hochspannungsquelle angeschlossen, wie dies auch bei der Aufladungseinrichtung 5 über die Anschlußleitung 53 der Fall ist. Infolgedessen liegt an der Kalibriereinrichtung das gleiche elektrische Potential wie an der Aufladungseinrichtung und an der durch diese aufgeladenen Folienblase 4 an.

Dieses elektrische Potential wirkt über die Metallsegmente 22, die in unmittelbarer Nähe zur Oberfläche der mit gleichem Potential elektrostatisch aufgeladenen Folienblase 4 positioniert sind, auf die Folienblase 4 ein, wodurch sich abstoßende Kräfte zwischen Kalibriereinrichtung und Folienblase 4 einstellen.

Diese abstoßenden Kräfte sind einerseits für die gewünschte Kalibrierung der Folienblase in ihrem gewünschten Durchmesser verantwortlich, gleichzeitig wird jedoch ein direkter Kontakt zwischen der Oberfläche der Folienblase 4 und den Metallsegmenten 22 der Kalibriereinrichtung 2 vermieden, so daß die Folienblase 4 bei ihrem Durchtritt durch die Kalibriereinrichtung 2 berührungslos kalibriert wird. Unerwünschte Markierungen der Kalibriereinrichtung und/oder Beschädigungen der Oberfläche der Folienblase 4 werden somit zuverlässig vermieden.

Um die Kalibriereinrichtung 2 den jeweiligen Produktionsparametern anpassen zu können, ist diese ferner in an sich bekannter Weise in der Höhe gemäß Pfeil H und in ihrem Durchmesser gemäß Pfeil D verstellbar.

Über eine entsprechende Variation der elektrischen Spannung, mit der die Kalibriereinrichtung 2 über die Anschlußleitung 23 beaufschlagt wird, kann die auf die in gleicher Weise elektrostatisch aufgeladene Folienblase 4 einwirkende und radial in Richtung auf die Mittelachse M gerichtete Kraft zur Kalibrierung der Folienblase 4 sowie der sich infolge der abstoßenden Kräfte zwischen den Metallsegmenten 22 und der Oberfläche der Folienblase 4 einstellende Abstand individuell bestimmt werden.

Im Ergebnis wird eine Folienblase 4 erhalten, die berührungslos infolge der Aufladung durch die Aufladungseinrichtung 5 und die nachfolgende Kalibrierung in der Kalibriereinrichtung 2 mit gleichem elektrischen Potential in ihrem Außendurchmesser kalibriert wird.

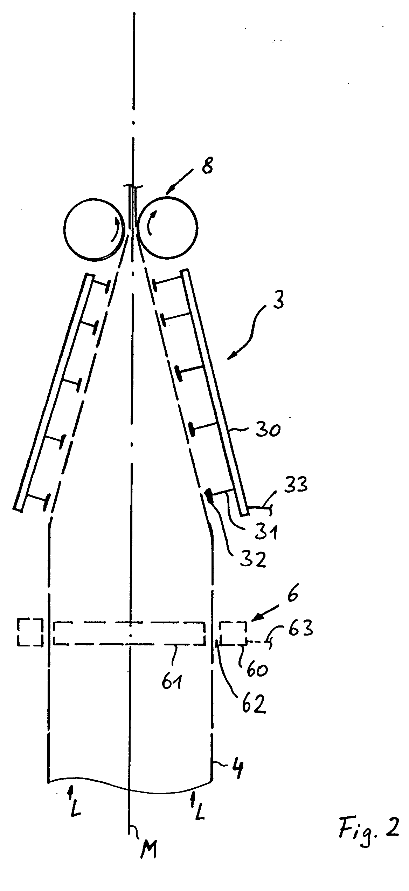

Die Figur 2 zeigt eine Weiterbildung der erfindungsgemäßen Anlage, die wahlweise zusätzlich zur Ausbildung gemäß Figur 1 vorgenommen werden kann und sich oberhalb der Kalibriereinrichtung 2 anschließt.

Man erkennt zunächst im unteren Bereich der Figur 2 die Folienblase 4, die bereits die Kalibriereinrichtung 2 gemäß Figur 1 durchlaufen hat und sich in Laufrichtung gemäß Pfeilen L weiter in vertikaler Richtung entlang der Mittelachse M bewegt. Nach einer ausreichenden Abkühlung der kalibrierten Folienblase 4 wird diese mittels einer Flachlegeeinrichtung 3, die in der Figur 2 lediglich schematisch dargestellt ist, zu einer Doppelfolienbahn flachgelegt und durch ein Abzugswalzenpaar 8 hindurchgezogen, woraufhin sie einer nicht näher dargestellten Abzugs- und Aufwickeleinrichtung zugeführt wird.

Ebenso wie bei der Kalibriereinrichtung 2 erfolgt auch die Flachlegung der Folienblase 4 in der Flachlegeeinrichtung 3 berührungslos.

Zu diesem Zweck umfaßt die Flachlegeeinrichtung 3 ein Traggestell 30, auf dessen der Oberfläche der Folienblase 4 zugewandten Seite eine Vielzahl von Tragarmen 31 angeordnet sind, die an ihrem freien, der Folienblase 4 benachbarten Ende jeweils Metallsegmente 32 aufweisen. Über eine Anschlußleitung 33 ist die Flachlegeeinrichtung 3 wiederum an eine elektrische Hochspannungsquelle anschließbar und mit von dieser erzeugtem gepulstem Gleichstrom beaufschlagbar.

Hierzu wird an die Metallsegmente 32 der Flachlegeeinrichtung 3 das gleiche elektrische Potential angelegt, welches auch der elektrisch durch die Aufladeeinrichtung 5 aufgeladenen Folienblase 4 entspricht.

Infolge dieser gleichen Potentiale zwischen Folienblase 4 und Flachlegeeinrichtung 3 stellt sich wiederum ein elektrostatisch bedingter abstoßender Effekt ein, so daß die Folienblase 4 berührungslos über die Metallsegmente 32 der Flachlegeeinrichtung 3 geführt wird, zu der gewünschten Doppelfolienbahn flachgelegt und nachfolgend über das Abzugswalzenpaar 8 abgezogen wird. Somit ist auch innerhalb der Flachlegeeinrichtung 3 ein unmittelbarer Kontakt und die Erzeugung von Kontaktreibung zwischen der Flachlegeeinrichtung 3 und der Oberfläche der Folienblase 4 ausgeschlossen.

Für den Fall, daß die von der Aufladeeinrichtung 5 erzeugte elektrostatische Aufladung der Folienblase 4 nach dem Durchtritt durch die Kalibriereinrichtung 2 nicht mehr ausreichend ist, um auch vorangehend beschriebene berührungslose Flachlegung in der Flachlegeeinrichtung 3 noch zu bewirken, kann gemäß Figur 2 zwischen der Kalibriereinrichtung 2 und der Flachlegeeinrichtung 3 in Laufrichtung L der Folie betrachtet eine weitere Aufladeeinrichtung 6 vorgesehen sein, die analog zur Aufladeeinrichtung 5 einen Innenring 61 im Innern der Folienblase 4 und einen diesen unter Belassung eines ringförmigen Durchtrittsspaltes 62 umgebenden Außenring 60 umfaßt. Hierbei ist die Folienblase 4 wiederum durch den Durchtrittsspalt 62 geführt und der elektrisch isoliert gehalterte Außenring 60 ist über eine Anschlußleitung 63 mit der elektrischen Spannung der Hochspannungsquelle mit gleichem Potential beaufschlagbar, so daß die Folienblase 4 beim Durchtritt durch die Aufladeeinrichtung 6 in analoger Weise wie bei der Aufladeeinrichtung 5 erneut elektrostatisch aufgeladen werden kann, um die berührungslose Flachlegung in der Flachlegeeinrichtung 3 zu gewährleisten.

Die vorangehend in den Zeichnungen geschilderten Bauteile sind lediglich beispielhaft zu verstehen und insbesondere hinsichtlich Anordnung und Anzahl nur rein schematisch dargestellt.

Insbesondere ist die Flachlegeeinrichtung 3 lediglich schematisiert und stark vereinfacht dargestellt, wobei insbesondere auf die Darstellung von Einlaufhilfsführungen sowie Seitenführungen für die Folienblase 4 verzichtet worden ist. Diese können jedoch in gleicher Weise elektrostatisch aufgeladen werden, um berührungslos auf die Folienblase 4 einzuwirken.

Anstelle von Aufladeeinrichtungen 5 und/oder 6 mit Innenringen und Außenringen können auch sogenannte Sprühelektroden Anwendung finden, die für die elektrostatische Aufladung von Kunststoffolien geeignet sind.

## Patentansprüche

1. Verfahren zur Herstellung einer Folie aus thermoplastischem Kunststoff, bei welchem der Kunststoff aus einem Blaskopf eines Extruders unter Ausbildung einer Folienblase austritt und die Folienblase nachfolgend eine Kalibriereinrichtung durchläuft, in der sie auf einen vorbestimmbaren Durchmesser kalibriert wird sowie anschließend mittels einer Flachlegeeinrichtung flachgelegt wird, **dadurch gekennzeichnet, daß** der die Folienblase bildende Kunststoff vor dem Eintritt in die Kalibriereinrichtung mit einer elektrischen Ladung beaufschlagt und elektrostatisch aufgeladen wird und die Kalibriereinrichtung mit einer elektrischen Ladung gleichen Potentials in der Weise aufgeladen wird, daß die Folienblase berührungslos die Kalibriereinrichtung durchläuft.

2. Verfahren nach Anspruch 1, **dadurch gekennzeichnet, daß** der Kunststoff nach seinem Austritt aus dem Blaskopf elektrostatisch aufgeladen wird.

3. Verfahren nach Anspruch 1, **dadurch gekennzeichnet, daß** der Kunststoff vor seinem Austritt aus dem Blaskopf innerhalb desselben elektrostatisch aufgeladen wird.

4. Verfahren nach einem der Ansprüche 1 bis 3, **dadurch gekennzeichnet, daß** die Flachlegeeinrichtung mit einer elektrischen Ladung gleichen Potentials wie der Kunststoff und die Kalibriereinrichtung aufgeladen wird, dergestalt, daß die Folienblase berührungslos die Flachlegeeinrichtung durchläuft.

5. Verfahren nach Anspruch 4, **dadurch gekennzeichnet, daß** der die Folienblase bildende Kunststoff nach dem Durchlauf durch die Kalibriereinrichtung und vor dem Erreichen der Flachlegeeinrichtung erneut mit elektrischer Ladung beaufschlagt und elektrostatisch aufgeladen wird.

6. Verfahren nach einem der Ansprüche 1 bis 5, **dadurch gekennzeichnet, daß** der die Folienblase bildende Kunststoff einen zwischen zwei Elektroden ausgebildeten Spalt durchläuft, wobei die Elektroden eine für die elektrostatische Aufladung des Kunststoffes ausreichende elektrische Potentialdifferenz aufweisen.

7. Anlage zur Herstellung einer Folie aus thermoplastischem Kunststoff, die einen Extruder mit Blaskopf für den Austritt einer Folienblase aus dem Kunststoff, eine außenseitig auf die Folienblase einwirkende Kalibriereinrichtung sowie eine der Kalibriereinrichtung nachgeordnete Flachlegeeinrichtung für die Folienblase umfaßt und nach dem Verfahren gemäß einem der Ansprüche 1 bis 6 betrieben wird, **gekennzeichnet durch** eine vor der Kalibriereinrichtung angeordnete Aufladungseinrichtung für den Kunststoff mit zwei Teilen, zwischen denen ein Durchtrittsspalt für den Kunststoff ausgebildet ist sowie eine Hochspannungsquelle mit Netzanschluß, Spannungsregler und Gleichrichter für die Erzeugung von gepulstem Gleichstrom, deren einer Pol an ein isoliert gelagertes Teil der Aufladungseinrichtung und die Kalibriereinrichtung angeschlossen ist.

8. Anlage nach Anspruch 7, **dadurch gekennzeichnet, daß** die Aufladungseinrichtung zwischen Blaskopf und Kalibriereinrichtung in Laufrichtung der Folienblase gesehen angeordnet ist.

9. Anlage nach Anspruch 7, **dadurch gekennzeichnet, daß** die Aufladungseinrichtung innerhalb des Blaskopfes angeordnet ist.

10. Anlage nach einem der Ansprüche 7 bis 9, **dadurch gekennzeichnet, daß** die Kalibriereinrichtung eine Vielzahl von bügelartig gebogenen Metallsegmenten umfaßt, die entlang einer den Umfang der Folienblase umgebenden Kreislinie angeordnet sind und mit dem Gleichstrom der Hochspannungsquelle beaufschlagbar sind.

11. Anlage nach einem der Ansprüche 7 bis 10, **dadurch gekennzeichnet, daß** das elektrisch isoliert gelagerte Teil der Aufladungseinrichtung, der Kalibrierkorb und die Flachlegeeinrichtung mit dem gleichen Pol der Hochspannungsquelle verbunden sind.

12. Anlage nach Anspruch 11, **dadurch gekennzeichnet, daß** zwischen Kalibriereinrichtung und Flachlegeeinrichtung in Laufrichtung der Folienblase gesehen eine weitere Aufladungseinrichtung für die Folienblase vorgesehen ist.
